# EUROPÄISCHE PATENTSCHRIFT

(11) **EP 1 070 239 B1**
(45) Veröffentlichungstag und Bekanntmachung des Hinweises auf die Patenterteilung: **24.04.2002**
(21) Anmeldenummer: 98956750.8
(22) Anmeldetag: 04.12.1998
(51) Int. Cl.: G01L 9/00, G01L 7/08, G01L 21/00

(54) **KAPAZITIVE VAKUUMMESSZELLE**
CAPACITIVE VACUUM MEASURING CELL
CELLULE DE MESURE SOUS VIDE A CAPACITE

(30) Priorität: 23.12.1997 CH 295097
(43) Veröffentlichungstag der Anmeldung: 24.01.2001
(73) Patentinhaber: Unaxis Balzers Aktiengesellschaft, 9496 Balzers (LI)
(72) Erfinder: BJÖRKMAN, Per, FIN-22310 Palsböle (FI); OLSSON, Ray, FIN-22240 Hammarland (FI)
(86) Internationale Anmeldenummer: CH9800515
(87) Internationale Veröffentlichungsnummer: WO9934184

(56) Entgegenhaltungen:
- EP-A- 0 701 112
- WO-A-95/28624
- DE-A- 3 901 492
- DE-A- 4 136 995
- DE-A- 19 645 613
- DE-C- 19 509 250
- US-A- 4 380 041
- US-A- 5 257 542

## Beschreibung

Die Erfindung bezieht sich auf eine kapazitive Vakuummesszelle gemäss Oberbegriff des Patentanspruches 1.

Es ist bekannt, Drücke bzw. Druckdifferenzen dadurch zu messen, indem eine dünne Membran druckbeaufschlagt wird und ihre Durchbiegung gemessen wird. Eine bekannte und geeignete Methode, die Durchbiegung solcher Membranen zu messen besteht darin, dass die Membrananordnung als variable elektrische Kapazität ausgebildet wird, wobei über eine Messelektronik in bekannter Weise die Kapazitätsänderung ausgewertet wird, welche mit der Druckänderung korreliert. Die Kapazität wird ausgebildet, indem die dünne, biegsame Membranfläche in geringem Abstand gegenüber einer weiteren Fläche angeordnet ist und beide einander gegenüberliegenden Oberflächen mit einem elektrisch leitenden Belag beschichtett oder aus elektrisch leitfähigem Material sind. Bei Druckbeaufschlagung der Membran verändert sich durch die Durchbiegung der Abstand zwischen den beiden Elektroden, was zu einer auswertbaren Kapazitätsänderung der Anordnung führt. Sensoren dieser Art werden in grossen Stückzahlen aus Silizium hergestellt. Sowohl der flächige Grundkörper wie auch die Membran bestehen hierbei oft vollständig aus Silizium-Material. Es gibt auch Ausführungen mit kombinierter Materialzusammensetzung z.B. Silizium mit Glasunterlage. Die Sensoren lassen sich dadurch kostengünstig herstellen. Für Vakuumanwendungen sind Drucksensoren dieser Art in der Regel nur für höhere Druckbereiche im Bereich von ca. 10⁻¹ mbar bis einige bar einsetzbar. Hohe Auflösung bei tieferen Drücken ab etwa 10⁻¹ mbar sind mit dem Werkstoff Silizium nicht mehr realisierbar. Unter anderem rührt dies daher, dass das Silizium an der Oberfläche mit der Umgebung reagiert und so die empfindliche Sensorcharakteristik gestört wird. Bereits Wasserdampf, der in normaler atmosphärischer Luft enthalten ist, führt zu entsprechenden Reaktionen an den Oberflächen. Das Problem wird zusätzlich verschärft, wenn der Sensor in chemisch aggressiven Atmosphären eingesetzt wird. Es wurde deshalb versucht, solche Silizium-Sensoren durch Passivieren der Oberflächen gegenüber aggressiven Ausseneinflüssen zu schützen. Es wurde auch versucht, die Oberfläche mit Schutzüberzügen zu versehen, damit die Haltbarkeit und Resistenz gegenüber der chemisch aggressiven Umgebung erhöht wird, wie dies in DE 41 36 987 beschrieben ist. Solche Massnahmen sind kostenaufwendig und führen bei mechanisch deformierbaren Teilen, wie Membranen, nur bedingt zum Erfolg, insbesondere bei besonders aggressiven Medien, wie Fluor, Bromsäure und deren Verbindungen, wie sie bei Vakuumätzverfahren eingesetzt werden.

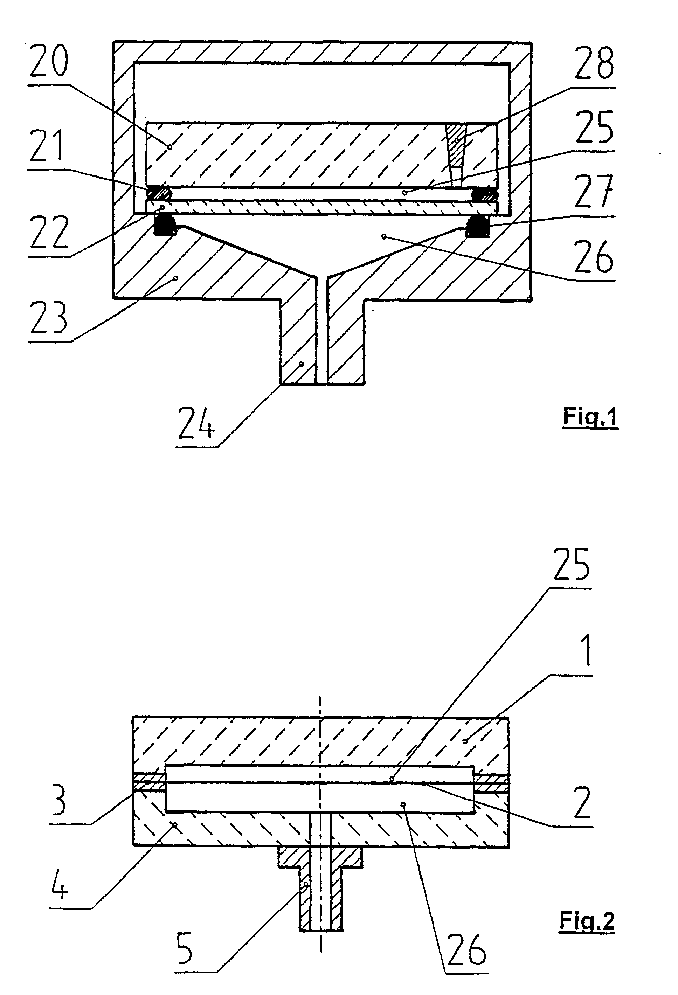

Es wurde deshalb versucht, Druckmesszellen für Vakuumanwendungen vollständig aus korrosionsfesten Materialien wie Al₂O₃ herzustellen. Eine bekannte Anordnung dieser Art ist in Fig. 1 dargestellt. Die Messzelle besteht aus einer Keramikplatte (20), über deren Fläche in geringem Abstand eine Membran (22) angeordnet ist, welche gegenüber der Keramikplatte (20) im Randbereich mit einer Schmelzdichtung (21) dichtend verbunden ist. Die Keramikplatte (20) bildet so zusammen mit der Membran (22) einen Referenzvakuumraum (25) aus, der über eine Pumpöffnung bei der Herstellung evakuiert worden ist und mit einer Dichtung (28) abgedichtet ist. Die im Referenzvakuumraum (25) sich gegenüber liegenden Oberflächen der Keramikplatte (20) und der Membran (22) sind elektrisch leitend beschichtet und mit isolierten Anschlüssen nach aussen geführt, um das Kapazitätssignal mit einer Elektonik auszuwerten (in der Figur nicht dargestellt). Die Platte (20) und die Membran (22) sind beide, um Korrosionsbeständigkeit zu erreichen, aus Keramik-Material, wie Al₂O₃ gefertigt. Diese Messzelle ist wiederum in einem vakuumdichten Gehäuse (23) angeordnet, welches mit einem Messzellenanschluss (24) versehen ist, welche mit den zu messenden Medien verbunden werden. Der sich ausbildende Messvakuumraum (26) ist über den Messzellenanschluss (24) gegenüber der Membran (22) mit einer Elastomerdichtung (27) dichtend verbunden, so dass die zu messenden Drücke nur die Membranoberfläche (22) beaufschlagen. Zum Zweck der Abdichtung wird die ganze Zelle über die Keramikplatte (20) und die Membran (22) gegen die Elastomerdichtung (27) gedrückt. Messzellen dieser Art sind bis anhin nur für höhere Drücke im Bereich von 0,1 mbar bis 100 bar einsetzbar. Die Bauweise führt ausserdem zu Verspannungen in den Materialien, was im tiefen Druckbereich, beispielsweise < 1 mbar die Reproduzierbarkeit der Messergebnisse und die Auflösung wesentlich beeinträchtigt. Die bisher verwendeten Keramikmembranen (22) weisen eine Dicke auf im Bereich von 279µm bis 2540µm. Solche Konstruktionen ermöglichen es nicht, grosse Messbereiche insbesondere bis zu tiefen Drücken von 0,1 mbar bis 10⁻⁶ mbar zu realisieren, ausserdem sind Konstruktionen dieser Art, wie sie auch in der US 5,553,502 offenbart sind, kostenaufwendig.

Eine weitere Messzelle der genanten Art ist in der WO 95/28624 offenbart. Die Messzelle besteht hierbei im wesentlichen vollständig aus Glaskeramikmaterial. Der asymmetrische Aufbau besteht aus einem ersten Gehäusekörper aus Keramik und einer davon über einen zylindrischen Glasring beabstandeten Membran aus Keramik, wobei die Membran und der Gehäusekörper über den als Glaslot dienenden Glasring, dichtend derart verbunden sind, dass ein dichter Referenzdruckraum ausgebildet wird. Die Oberflächen der Membran und des Gehäusekörpers sind im Zentrum mit dünnen Goldschichten versehen welche die Elektroden bilden und somit die Messkapazität, wobei die Goldfilme gegenüber dem Membrandurchmesser wesentlich kleiner sind. Speziellen Wert wird bei dieser Ausführung auf die Abschirmungen gelegt welche sowohl membranseitig wie gehäuseseitig den ganzen Durchmesser der Anordnung überdecken, um Streukapazitäten zu vermeiden.

In der US 5257542 ist eine kapazitive Vakuummesszelle offenbart bei welcher sowohl das Gehäuse wie auch die Membrane beispielsweise aus Gläskeramik oder Plastik hergestellt ist. Zwischen der Membran und dem Gehäusekörper ist ein Referenzvacuum vorgesehen welches mit Hilfe eines Gettermateriales aufrecht erhalten wird. Die Anordnung beschäftigt sich vorwiegend mit der Lösung von Bondproblemen und Kontaktproblemen im Zusammenhang mit der Rontaktierung der Elektroden. Hierzu sollen vor allem innerhalb der Basisscheibe mindestens zwei separate metallische Zonen angeordnet werden, welche Seriekapazitäten bilden im Bezug auf die Membrane.

Ein kapazitiver Drucksensor mit einer Membran und einer Basisplatte aus Kunststoff, Glas oder Keramik ist in der DE 41 36 995 beschrieben. Eine elektrisch isolierende Basisplatte und eine ebenfalls isolierende von der Basisplatte beabstandete, parallele Membran, die in ihren Randbereichen mit einander verbunden und auf deren gegenüberliegenden Innenflächen metallische Kondensatorelektroden bildende Schichtabschnitte aufweisen, schliessen eine Referenzdruckkammer ein. Es wird vorgeschlagen auf der Innenfläche der Basisplatte mindestens zwei separate Basiselektroden vorzusehen, die mit elektrisch miteinander verbundenen Gegenelektroden auf der Membran, in Serien geschaltete Kondensatoren bilden, deren Anschlüsse an der Basisplatte vorgesehen sind.

In der EP 0 701 112 ist eine keramische Zellenanordnung beschrieben für Sensoranwendungen insbesondere aber für piezoelektrische, elektrostriktive Aktuatoren. Bei dieser Anordnung werden auf einem keramischen Grundkörper Blasenförmige keramische Membranen angeordnet welche durch Sintern mit dem Grundkörper verbunden sind. Es wird ermöglicht mehrere Membrananordnungen nebeneinander zu realisieren. Offenbart wird eine Methode, wie die blasenförmigen Membranen in einem Teilbereich der Oberfläche in einem Prozessschritt derart nachgeformt wird, dass die Herauswölbungen der Membranen innerhalb einer Ebene ausgerichtet werden.

Die vorliegende Erfindung hat es sich zur Aufgabe gemacht, die Nachteile des Standes der Technik zu beseitigen. Insbesondere stellt sich die vorliegende Erfindung die Aufgabe, eine einfach aufbaubare, kostengünstige Vakuummesszelle zu realisieren, welche es erlaubt, Drücke im Bereich von 10⁻⁶ mbar bis 1000 mbar, insbesondere von 10⁻⁶ mbar bis 1 mbar mit Genauigkeiten von besser 1%, vorzugsweise besser 0,3% vom Messwert zu messen. Der Messbereich kann hierbei durch mehrere erfindungsgemässe Zellen- bzw. Membranausführungen abgedekt,bzw. unterteilt werden. Zudem soll die Messzelle gegen aggressive Medien korrosionsbeständig sein und kompakt und wirtschaftlich herstellbar sein.

Die Aufgabe wird bei der gattungsgemässen Vakuummesszelle gemäss den Merkmalen des Patentanspruchs 1 gelöst. Ein Verfahren zur Herstellung einen solchen Messzelle und eine Verwendung einen solchen Messzelle sind in den Patentansprüchen 18 and 24 definiert. Die abhängigen Patentansprüche beziehen sich auf vorteilhafte weitere Ausgestaltungen der Erfindung.

Die erfindungsgemässe kapazitive Vakuummesszelle ist vollständig aus einer Keramik, wie insbesondere Al₂O₃ hergestellt. Dadurch wird sehr hohe Korrosionsbeständigkeit und langlebige Reproduzierbarkeit erreicht. Nur in Bereichen, wo gedichtet werden muss oder wo Durchführungen vorgesehen sind, werden in geringen Mengen andere Materialien als Al₂O₃ vorgesehen, sofern nicht das Al₂O₃ ohne Fremdmaterialzugabe verschweisst wird. Die Zelle besteht aus einem ersten plattenförmigen Gehäusekörper, über welchem eine Membran im Randbereich dichtend angeordnet ist, so dass diese einen Referenzvakuumraum einschliesst. Auf der dem Referenzvakuumraum abgewandten Seite ist ein zweiter Gehäusekörper ebenfalls im Randbereich dichtend schliessend beabstandet angeordnet, so dass dort ein Messvakuumraum ausgebildet wird. Dieser Messvakuumraum ist mit einem Anschluss für die Zuleitung des zu messenden Mediums versehen. Die Oberflächen des ersten Gehäusekörpers und der Membrane, welche den Referenzvakuumraum ausbilden, sind elektrisch leitend beschichtet, beispielsweise mit Gold, und bilden die Elektroden der Kapazitätsmesszelle. Die Elektroden wiederum sind herausgeführt, beispielsweise durch den ersten Gehäusekörper oder durch den Abdichtungsbereich in der Randzone. Die im wesentlichen parallel angeordneten Elektrodenflächen weisen einen Abstand im Bereich von 2µm bis 50µm auf. Die Abdichtung der Membran im Randbereich gegenüber den beiden Gehäusen erfolgt vorzugsweise durch Verschweissung, beispielsweise durch Laserschweissen. Sehr geeignet und einfach in der Anwendung ist aber auch ein Glaslot, welches ebenfalls korrosionsbeständig ist. Eine weitere Möglichkeit der dichtenden Verbindung besteht auch darin, Gehäuseteile diffusiv zu verbinden, beispielsweise im Grünkörperstadium, wenn es darum geht, Al₂O₃-fremdes Material vollständig zu vermeiden.

Die erfindungsgemässe Anordnung der Messzelle ermöglicht im Wesentlichen einen symmetrischen Aufbau, der jegliche Verspannungen im Gehäuse vermeidet. Dies ist besonders wichtig, um eine hohe Messempfindlichkeit zu erreichen und tiefe Messdrücke bei hoher Genauigkeit und Reproduzierbarkeit zu realisieren. Dadurch wird ausserdem ermöglicht, eine sehr dünne Membran aus Keramik zu verwenden, welche zwingend ist, wenn die Messzelle tiefere Vakuumdrücke als 100 mbar, und vor allem tiefer als 10 mbar, zuverlässig mit kapazitiven vollkeramischen Messzellen erfassen soll. Hierzu sind Membrandicken von 10µm bis 250µm notwendig, wobei Membrandicken von 10µm bis 120µm bevorzugt werden, um eine sehr gute Auflösung zu erreichen. Typische Membrandickenbereiche sind beispielsweise:
- bei 1000 Torr Membrandicke 760µm ± 10µm
- bei 100 Torr Membrandicke 345µm ± 10µm
- bei 10 Torr Membrandicke 150µm ± 10µm
- bei 1 Torr Membrandicke 100µm ± 10µm
- bei 0,1 Torr Membrandicke 60µm ± 10µm
- bei 0,01 Torr Membrandicke 40µm ± 10µm

Solch dünne Membranen sind besonders schwierig herzustellen und benötigen nach dem Sinterschritt mindestens einen weiteren Glättungsschritt. Es ist ausserdem besonders wichtig, dass die Membran genügend Heliumdichtheit aufweist, was nur erreicht werden kann, wenn die Korngrössen des Membranmaterials nicht zu gross sind und sich im Bereich von < 20µm bewegen. Kleinere Korngrössen von < 10µm werden bevorzugt, insbesondere solche die < 5µm sind. In jedem Fall sollten im Querschnitt der Membran über die Dicke betrachtet mindestens zwei Körner vorhanden sein, bei mehr als fünf Körnern übereinander sind die Membranen besonders dicht.

Ein weiteres wichtiges Kriterium für die erreichbare Genauigkeit der Messzelle ist die Planität der Membranfläche. Die Unebenheit über die gesamte Fläche sollte in jedem Fall nicht mehr als 30 % des Elektrodenabstandes betragen, wobei es besser ist, wenn sie nicht mehr als 15 % beträgt. Dies bedeutet, dass die Unebenheit über die gesamte Fläche nicht grösser als 10µm sein sollte, vorzugsweise nicht mehr als 5µm. Die Unebenheit ist hierbei definiert als die Differenz vom tiefsten zum höchsten Punkt. Die Reinheit des verwendeten Aluminiumoxides der Membrane sollte, um entsprechend gute Langzeitstabilität zu erreichen, mindestens 94 % betragen, wobei bevorzugte Werte über 99 % liegen.

Um die Qualität der im Randbereich liegenden Membrandichtung nicht zu beeinflussen, ist es vorteilhaft, wenn die elektrisch leitenden Schichten über Durchführungen, welche am ersten Gehäusekörper angeordnet sind, herausgeführt werden, und nicht direkt über die Membrandichtung bzw. -verschweissung.

Der Referenzvakuumraum muss ein langzeitstabiles Vakuum hoher Qualität aufweisen, um die präzise Funktion der Messzelle über lange Zeit gewährleisten zu können. Dazu ist nach dem Abpumpen ein Getter vorzusehen, welcher vorzugsweise in einem kleinen Volumen am ersten Gehäuse angeordnet ist und in Verbindung mit dem Referenzvakuumraum steht. Dieser Getter sorgt dafür, dass der Referenzvakuumdruck tiefer liegt als der zu messende Druck, vorzugsweise aber um mindestens eine Dekade tiefer. Um Verunreinigungen des Innenbereiches der Messzelle zu vermeiden, sollte ein Gettertyp gewählt werden, der nicht verdampfend ist.

Messzellen nach der erfindungsgemässen Ausführung können sehr kompakt und kostengünstig aufgebaut werden. Der Durchmesser einer solchen Zelle kann im Bereich von 5 bis 80 mm liegen, wobei bevorzugterweise die Messzelle einen Durchmesser von 5 bis 40 mm aufweist. Die Dicke einer solchen Zelle liegt hierbei vorzugsweise im Bereich von 2 mm bis 25 mm.

Zur Herstellung einer funktionsfähigen Messzelle mit den vorerwähnten Eigenschaften ist die Einhaltung des entsprechenden Herstellverfahrens sehr wichtig. Insbesondere die Herstellung der dünnen Keramikmembrane fordert besondere Massnahmen. Sowohl die Membrane wie der ganze Aufbau der Messzelle muss besonders eigenspannungsfrei erfolgen.

Geeignete Membranen aus Al₂O₃ werden dadurch hergestellt, dass, wie im Keramikbereich üblich, zuerst ein Schlicker nach einem bestimmten Rezept gemischt wird und die teigförmige Masse danach auf ein bandförmiges Trägermaterial, beispielsweise eine Kunststofffolie, dünn und gleichmässig aufgebracht wird. Nach dem Trocknen werden diese Folien auf Fehlstellen geprüft, wie Blasen oder Löcher. Die nun vorliegende Masse, welche noch nicht gesintert und somit noch flexibel ist, wird als Grünkörper bezeichnet. Die gewünschte Membranform wird nun aus dem bandförmigen Grünkörpermaterial herausgeschnitten, wobei dieses hierbei noch an der Folie haftet. Geschnitten wird beispielsweise mit Messern, vorzugsweise mit einem Laser. Das Ausschneiden bzw. Ritzen des Grünkörpers muss besonders vorsichtig erfolgen, so dass gegen die Fläche der zukünftigen Keramikmembran an der Schneidkante keine Verwerfungen bzw. Erhebungen das Mass der Welligkeit der Membran mitbestimmend entstehen. Wenn mit dem Messer geschnitten wird, kann hierfür beispielsweise gleichzeitig mit dem Schneidvorgang membranseitig ein Anpressrädchen mitgeführt werden, welches ein zu starkes Aufwerfen des Grünkörpers verhindert. Anschliessend erfolgt ein sorgfältiges Trennen der vorzugsweise in Kreisform ausgeschnittenen Membran von der Folie, indem diese beispielsweise über eine Kante abgezogen wird. Die Membranen werden anschliessend in einem Ofen gesintert. Für die Sinterung werden die Membranen vorzugsweise auf hartgebrannte, plane Al₂O₃-Platten gelegt und beispielsweise übereinander beabstandet gestapelt und bei typischerweise 1630°C gesintert. Die Temperatur wird während etwa 400 Minuten auf diese 1630°C hochgefahren, also etwa mit 4°C Temperaturanstieg pro Minute, dann einige Minuten, beispielsweise 6 Minuten, auf dieser Temperatur belassen und danach in einem ersten Schritt mit langsamer Temperaturerniedrigung von 3°C pro Minute während etwa 210 Minuten auf 1000°C abgesenkt und in einem weiteren, zweiten Schritt mit einer Temperaturerniedrigung von 6°C in der Minute während etwa 170 Minuten wieder auf Umgebungstemperatur abgekühlt. Es liegt nun eine Keramikmembran vor, die gegenüber dem Grünkörper ein hartes, reines Keramikgefüge aufweist, wobei die Additive des Grünkörpermateriales verdampft sind. Nach diesem Sinterschritt ist die Membrane stark uneben und weist Verwerfungen auf von mehreren Millimetern bei einem Durchmesser von etwa 40 mm.

Die Membrane kann in diesem Zustand, wegen den starken Verwerfungen und Eigenspannungen im Material noch nicht verwendet werden. Die Membrane muss mit mindestens einem weiteren Schritt geglättet werden. Dies erfolgt dadurch, dass die Membrane einem weiteren Heizschritt im Ofen unterzogen wird. Hierbei werden die Membranen vorsichtig zwischen massive und sehr plane hartgesinterte Al₂O₃-Platten (auch "dead"-Al₂O₃, d.h. grosskörnige) gelegt, welche bei einem Membrandurchmesser von 40mm vorzugsweise ein Gewicht von einigen 10 bis einigen 100 Gramm, wie im Beispiel etwa 60 Gramm, aufweisen oder entsprechend beschwert sind. Die Temperatur wird während etwa 390 Minuten mit 4°C pro Minute langsam auf etwa 1570°C hochgefahren. Nach einer kurzen Verweilzeit von einigen Minuten, etwa 25 Minuten, auf dieser Temperatur wird die Temperatur wiederum langsam abgesenkt, während etwa 115 Minuten mit etwa 5°C pro Minute, bis 1000°C erreicht worden sind. Danach wird die Temperatur mit etwa 6°C pro Minute weiter abgesenkt, während etwa 166 Minuten, bis Umgebungstemperatur erreicht wird. Nach einem solchen Glättungsschritt erscheint die Membran nur noch mit einer sehr geringen Verwerfung von einigen zehntel Millimetern. Wichtig bei diesem Glättungsschritt ist, dass die Temperatur gegenüber dem ersten Sinterheizschritt weniger hoch ist, vorzugsweise bis maximal 100°C unter der Sintertemperatur liegt. Um gute Ergebnisse zu erzielen, wie sie für die geforderte Messzellenqualität notwendig sind, muss dieser Glättungsheizschritt mindestens zweimal durchgeführt werden. Aus wirtschaftlichen Gründen sollten die Glättungsheizschritte so durchgeführt werden, dass nicht mehr als zwei Glättungsschritte notwendig sind. Besonders gute Ergebnisse werden dadurch erzielt, dass zwischen den Glättungsheizschritten die Membran sorgfältig von der Platte abgelöst wird und in etwas versetzter Position wieder abgelegt wird. Sie kann mit Vorzug sogar umgedreht abgelegt werden. Die Verwendung eines Stapels von mehreren planen Platten mit dazwischenliegenden Membranen macht die Anordnung besonders wirtschaftlich. Es liegen nun Membranen vor, die wahlweise Dicken im Bereich von 10µm bis 250µm, vorzugsweise < 120µm aufweisen können. Mit dem vorliegenden Verfahren können Planitäten der Membranen erreicht werden, die besser als 10µm über die gesamte Fläche sind, vorzugsweise sogar besser als 5µm. Die Körner des Membranmateriales sind dabei im Mittel kleiner als 20µm, vorzugsweise kleiner als 10µm, wobei sogar solche, die kleiner als 5µm sind erzielt werden können. Dadurch kann auch die Forderung, dass über die Dicke mindestens zwei Körner vorhanden sein müssen, besser sogar mindestens fünf Körner, ohne weiteres erreicht werden. Somit können heliumdichte Membranen realisiert werden, welche für die Messzellenanforderung notwendig sind. Die Membran ist nun bereit für die Weiterverwendung im Messzellenaufbau.

Die Membran sowie eine plane Oberfläche des ersten Gehäusekörpers aus Al₂O₃ wird nun mit einem elektrisch leitenden Belag für die Ausbildung der Elektroden versehen. Dazu kann beispielsweise eine metallhaltige, beispielsweise eine goldhaltige Farbe verwendet werden, die beispielsweise aufgepinselt, aufgesprayt oder vorzugsweise aufgedruckt wird. Eine weitere Methode besteht darin, die elektrisch leitende Schicht mit Vakuumaufdampfen zu erzeugen, vorzugsweise mit Sputtern. Um die Schicht präzise und definiert erstellen zu können, ist es von Vorteil, wenn beispielsweise eine Goldschicht, die zuerst relativ dick, etwa 1µm, aufgebracht wird, anschliessend im inneren Bereich wieder abgedünnt wird, bis auf einige Nanometer Dicke, etwa 5 nm, mit einem Ätzverfahren, wie vorzugsweise einem Ionen- bzw. Sputterätzen. Auf diese Art entsteht ein dickerer Randbereich welcher, wenn beispielsweise gelötet wird, diffusionsverluste kompensiert. Ein praktisch einfach anwendbares und bevorzugtes Verfahren besteht darin, dass zuerst eine dünne Schicht von einigen nm über die ganze Fläche aufgebracht wird und danach am Rand eine dickere Schicht Gold mit Siebdruck (d.h. mit Kombinationsverfahren und verschiedenen Schichtdicken). Solchermassen behandelte Membranen, bzw. Gehäuse werden anschliessend getempert mit Temperaturen von einigen 100°C, vorzugsweise im Bereich von 650°C.

Das zweite Keramikgehäuse, welches messeitig angeordnet wird, besteht aus einer planen Keramikplatte, welche membranseitig eine flächige Ausnehmung aufweisen kann, um einen genügend grossen Messvakuumraum zu bilden. Der Anschlusstutzen wird an diesem Keramikgehäuse durch Schweissen, Kleben oder Löten, vorzugsweise mit einem Glaslot, so verbunden, dass die Anschlussöffnung mit dem zukünftigen Messvakuumraum kommunizieren kann.

Die Membrane wird im peripheren Bereich, wo die Dichtung erfolgt, beidseitig mit einer Glaspaste versehen, vorzugsweise mit einem Siebdruckverfahren. Nach dem Trocknen wird die Membrane mit der Glaspaste in einem Ofen bei einigen 100°C, vorzugsweise bei etwa 670°C, eingebrannt. Danach wird die Glasoberfläche beidseitig poliert, wobei vorzugsweise auch der zukünftige Elektrodenabstand definiert wird.

Das elektrodenseitige, obere Keramikgehäuse kann zusätzlich auf der Aussenseite mit Hilfe des bereits erwähnten Beschichtungsprozesses, mit einer elektrisch leitenden Schicht versehen werden, um eine Abschirmung zu bilden. Ausserdem werden auch hier die Anschlusstellen am Gehäuse angebracht. In einem weiteren Schritt werden die Bohrungen für die elektrische Durchführung für die Elektrodenanschlüsse metallisiert, vorzugsweise mit Silber.

In einer Testphase wird das erste Gehäuse mit der Elektrode und den Durchführungen, zusammen mit der aufgelegten Membran, auf Dichtigkeit und auf die Elektrodendistanz geprüft. Danach wird der untere Gehäuseteil aufgelegt und der ganze Aufbau gewichtsbelastet, um ebenfalls die Funktion und die Distanzen zu testen. Anschliessend erfolgt in einem Montagerahmen allenfalls zusätzlich das Aufsetzen des Getteranschlusses und unter Gewichtsbelastung von etwa 200 Gramm ein Einbrennen der Glasdichtungen bei einigen 100°C, vorzugsweise bei etwa 630°C, und anschliessend ein Test, ob die erforderlichen Abstände eingehalten werden. Allenfalls kann durch weitere Gewichtsbelastung oder -entlastung und einen weiteren Brennvorgang der Membranabstand korrigiert werden. Der Vorgang des Dichtens muss sehr sorgfältig erfolgen und wie bereits erwähnt sollten bei der Messzellenanordnung keine Spannungen auftreten. Alternativ kann anstelle von Glaslot oder anderen Abdichtungsmitteln auch eine direkte Verschweissung erfolgen, vorzugsweise eine Laserverschweissung.

Die Erfindung wird nun anhand von Figuren schematisch und beispielsweise beschrieben.

Es zeigen:
Fig. 2 schematisch und im Querschnitt eine erfindungsgemässe kapazitive Vakuummesszelle.
Fig. 3 eine vergrösserte Darstellung und einen Ausschnitt aus der Messzelle nach Fig. 2.
Fig. 4 im Querschnitt ein Detail einer Getteranordnung.
Fig. 5 im Querschnitt eine weitere Variante einer Getteranordnung.

Eine erfindungsgemässe kapazitive Messzelle aus Al₂O₃ mit im wesentlichen vollständig um die Membran symmetrisch angeordnetem Aufbau ist im Querschnitt in Fig. 2 dargestellt. Das erste Gehäuse (1) besteht aus einer Keramikplatte aus Al₂O₃ welches in einem Abstand von 2µm bis 50µm gegenüber der keramischen Membran (2) im Randbereich dichtend verbunden ist und einen Referenzvakuumraum (25) einschliesst. Der Abstand zwischen den beiden Flächen wird in der Regel direkt beim Montieren über das Dichtungsmaterial (3), welches zwischen dem Membranrand und dem Gehäuserand liegt, eingestellt. Auf diese Weise kann eine vollständig plane Gehäuseplatte (1) verwendet werden. Auf die gleiche Art und Weise wird in einem zweiten Gehäuse (4) auf der gegenüberliegenden Membranseite ein Messvakuumraum (26) ausgebildet, welcher über einen Anschluss-Stutzen (5) durch eine Öffnung im Gehäuse (4) für zu messende Medien erreichbar ist.

In Fig. 3 ist ein vergrösserter Ausschnitt des Randbereiches einer Messzelle im Querschnitt dargestellt. Die Dichtung (3) beidseitig der Membran (2) definiert wie erwähnt den Abstand der beiden Gehäuse (1 und 4). Diese Dichtung ist beispielsweise und bevorzugt ein Glaslot, welches einfach handhabbar ist und beispielsweise durch Siebdruck aufgebracht werden kann. In einer typischen Messzelle mit einem Aussendurchmesser von 38 mm und einem freien Membran-Innendurchmesser von 30 mm beträgt der Abstand (3) etwa 2 bis 50µm, vorzugsweise 12 bis 35µm. Hierbei ist beispielsweise das erste Gehäuse (1) 5 mm dick, das zweite Gehäuse (4) 3 mm dick. Das zweite Gehäuse (4) wird vorzugsweise im Innenbereich, wie in Fig. 1 dargestellt, mit einer ca. 0,5 mm tiefen Ausnehmung versehen, um den Messvakuumraum (26) zu vergrössern. Die Membran (2) und das Gehäuse (1) sind referenzvakuumraumseitig mit je einer elektrisch leitenden Schicht (7) beschichtet. Die beiden Schichten stehen miteinander elektrisch nicht in Verbindung. Die Schichten (7) können beispielsweise aufgemalt, aufgedruckt, aufgesprayt oder mit einem Vakuumverfahren aufgebracht werden. Vorzugsweise werden sie mit einem Vakuumverfahren, wie mit Bedampfen oder Sputtern aufgebracht. Besonders geeignet als Schichtmaterial ist Gold, welches beispielsweise mit 1µm Schichtdicke aufgedampft wird und hernach mittels Sputter Ätzen auf einige Nanometer, beispielsweise 5 nm abgedünnt wird. Die Schicht kann dadurch in der Dicke definiert und dünn genug, spannungsfrei eingestellt werden. Die elektrischen Anschlüsse der Membranen (7) erfolgen vorzugsweise mit vakuumdichten, elektrisch leitenden Durchführungen (6), vorzugsweise durch das Gehäuse (1), wo sie dann mit der Auswertelektronik verbunden werden können.

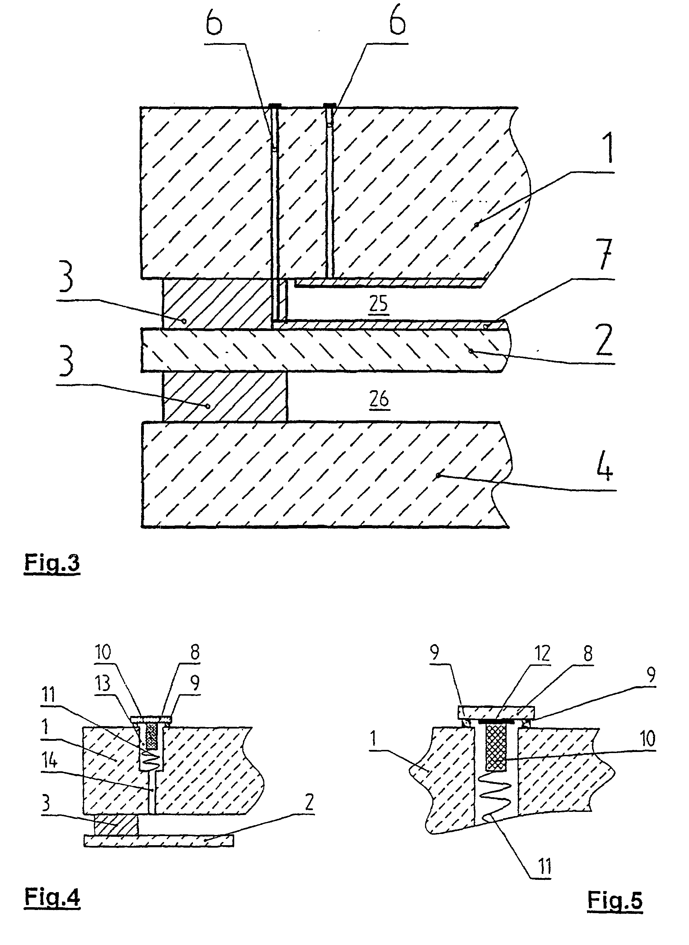

Um ein langzeitstabiles Referenzvakuum im Raum (25) aufrecht erhalten zu können, wird, wie in Fig. 4 dargestellt, ein Getter (10) vorgesehen. Dieser Getter ist vorzugsweise ein nicht verdampfbarer Getter, um den Referenzvakuumraum (25) von verdampfenden Partikeln freizuhalten. Am Gehäuse (1) ist ein Getterraum (13) zur Aufnahme des Getters (10) vorgesehen, welcher über eine Verbindung (14) bzw. Abpumpleitung mit dem Referenzvakuumraum (25) in Verbindung steht. Der Getterraum (13) kann auch auf dem Gehäuse (1) aufgesetzt werden, wird aber mit Vorteil ins Gehäuse (1) eingelassen. Beim Abpumpen des Referenzvakuumraumes (25) über die Abpumpleitung (14) ist der Getterraum (13), indem der Deckel (8) mit dem Getter (10) beabstandet ist und eine Öffnung freigibt, mit der Abpumpvorrichtung verbunden. Der Deckel (8) aus Metall oder aber auch aus Keramik wird während dem Abpumpen aufgeheizt, so dass der Getter aktiviert wird und gleichzeitig entgast wird. Nach Aktivieren des Getters wird während dem Abpumpen der Deckel (8) mit dem Dichtmaterial (9) zwischen Deckel (8) und Gehäuse (1) dichtend ans Gehäuse (1) gepresst. Das Dichtmaterial (9) kann beispielsweise diffusiv, ein Kleber, ein Lot oder bevorzugterweise ein Glaslot sein. Die Haltefeder (11), welche den Getter gegen den Deckel (8) drückt, sorgt dafür, dass der Getter gegenüber dem Deckel (8) thermisch gut kontaktiert wird.

Eine weitere Variante einer Getteranordnung ist in Fig. 5 dargestellt, wo zur besseren thermischen Kontaktierung des Getters (10) gegenüber dem Deckel (8) ein Kontaktiermittel (12), vorzugsweise ein Lot, zwischen Getter (10) und Deckel (8) angebracht wird. Ein guter Wärmeübergang ist hier notwendig, um den Getter (10) über den Deckel (8) thermisch von aussen aktivieren zu können. Die vorliegende Getteranordnung erlaubt ausserdem das Aktivieren des Getters und anschliessende Verschweissen des Deckels (8) in einem Arbeitsgang, wenn dafür gesorgt wird, dass die Aktivierungs-Temperatur des Getters (10) und die Verschweiss-Temperatur des Lotes (9) im Wesentlichen übereinstimmen.

## Patentansprüche

1. Kapazitive Vakuummesszelle mit einem ersten Gehäusekörper (1) aus Al₂O₃ mit einer davon beabstandeten im Randbereich dichtend angeordneten Membrane (2) aus Al₂O₃, derart dass dazwischen ein Referenzvakuumraum (25) ausgebildet wird, wobei die in geringem Abstand gegenüberliegenden Oberflächen der Membrane (2) und des Gehäusekörpers (1) elektrisch leitend beschichtet (7) sind und die Messkapazität bilden, **dadurch gekennzeichnet, dass** ein zweiter Gehäusekörper (4) aus Al₂O₃ gegenüber der Membrane (2) im Randbereich dichtend vorgesehen ist und mit dieser einen Messvakuumramn (26) bildet, in welchen Anschlussmittel (5) munden zur Verbindung mit dem zu messenden Medium, und dass der erste Gehäusekörper (1) und der zweite Gehäusekörper (4) mit der dazwischenliegenden Membran (2) im Randbereich symmetrisch dichtend verbunden sind, und die flächige Unebenheit der Membrane (2) nicht mehr als 30 % des Elektrodenabstandes beträgt und dieser im Bereich von 2µm bis 50µm liegt, wobei die Membrane (2) eine Dicke aufweist im Bereich von 10µm bis 250µm bei einer mittleren Korngrösse des Membranmaterials von ≤ 20µm und dass im Querschnitt der Membran (2) über die Dicke mindestens zwei Körner vorhanden sind wobei der Durchmesser der Zelle im Bereich von 5 bis 80 mm liegt.

2. Messzelle nach Anspruch 1, **dadurch gekennzeichnet, dass** die den Referenzvakuumraum (25) einschliessenden und die Messkapazität bildenden Elektroden (7) im Bereich von 12µm bis 35µm beabstandet sind.

3. Messzelle nach Anspruch 1 oder 2, **dadurch gekennzeichnet, dass** die Verbindung als Verschweissung, als Diffusionsverbindung oder vorzugsweise als Lotverbindung, wie insbesondere mit Glaslot, ausgeführt ist.

4. Messzelle nach Anspruch 1 bis 3, **dadurch gekennzeichnet, dass** die Membrane (2) eine Dicke aufweist im Bereich von 10µm bis 120µm.

5. Messzelle nach Anspruch 4, **dadurah gekennzeichnet, dass** die mittlere Korngrösse des Membranmateriales ≤ 10µm, insbesondere ≤ 5µm, beträgt.

6. Messzelle nach Anspruch 4 oder 5, **dadurch gekennzeichnet, dass** im Querschnitt der Membran (2) über die Dicke mindestens fünf Körner vorhanden sind.

7. Messzelle nach einem der vorhergehenden Ansprüche, **dadurch gekennzeichnet, dass** die flächige Unebenheit der Membrane (2) nicht mehr als 15 % beträgt.

8. Messzelle nach einem der vorhergehenden Ansprüche, **dadurch gekennzeichnet, dass** die flächige Unebenheit der Membrane (2) nicht mehr als 10µm, vorzugsweise nicht mehr als 5µm beträgt.

9. Messzelle nach einem der vorhergehenden Ansprüche, **dadurch gekennzeichnet, dass** die Reinheit des Al₂O₃ der Membrane (2) mindestens 94 % beträgt, vorzugsweise mindestens 99 %.

10. Messzelle nach einem der vorhergehenden Ansprüche, **dadurch gekennzeichnet, dass** die Kontakte zu den elektrisch leitenden Schichten (7) über Durchführungen (6) am ersten Gehäusekörper (1) dichtend herausgeführt sind.

11. Messzelle nach einem der vorhergehenden Ansprüche, **dadurch gekennzeichnet, dass** am oder im ersten Gehäuse (1) ein Volumen (13) mit einem Getter (10) vorhanden ist, wobei zwischen Volumen (13) und dem Referenzvakuumraum (25) eine Verbindung (14) vorgesehen ist und das Volumen (13) mit einem Deckel (8) dichtend verschlossen ist.

12. Messzelle nach Anspruch 11, **dadurch gekennzeichnet, dass** der Getter vom Typ "nicht verdampfend" ist.

13. Messzelle nach Anspruch 11 oder 12, **dadurch gekennzeichnet, dass** der Getter (10) im Volumen (13) mit einer Feder (11) gegen den Deckel (8) gedrückt wird.

14. Messzelle nach Anspruch 13, **dadurch gekennzeichnet, dass** zwischen Getter (10) und Deckel (8) ein Kontaktierungsmaterial (12) vorzugsweise ein Lot vorgesehen ist.

15. Messzelle nach einem der vorhergehenden Ansprüche, **dadurch gekennzeichnet, dass** der Druck im Referenzvakuumraum (25) tiefer ist als der tiefste zu messende Druck, vorzugsweise um mindestens eine Dekade tiefer.

16. Messzelle nach einem der vorhergehenden Ansprüche, **dadurch gekennzeichnet, dass** der Durchmesser der Zelle im Bereich von 5 bis 40 mm liegt.

17. Messzelle nach einem der vorhergehenden Ansprüche, **dadurch gekennzeichnet, dass** mindestens eine der Oberflächen der Gehäuse (1, 4) eine elektrisch leitende Beschichtung, zur Ausbildung einer Abschirmung, aufweist.

18. Verfahren zur Herstellung einer Messzelle nach einem der Ansprüche 1 bis 17 mit einer Al₂O₃ Membrane, **dadurch gekennzeichnet, dass** dieses folgende Schritte umfasst:
• Membranen werden aus einem Al₂O₃ Schlicker geformt und die Membrandicke derart festgelegt, dass diese mindestens 2 Körner über die Dicke aufweist.
• daraufhin erfolgt ein erster Heizschritt zur Sinterung der Membrane in einem Ofen mit darauf folgender Abkühlung,
• anschliessend wird in einem zweiten Heizschritt die Membrane nochmals erhitzt und geglättet indem während dem Glättungsheizschritt die Membrane (2) zwischen planen Platten durch Zusammenpressen, wie insbesondere durch Gewichtsbelastung, geglättet und danach abgekühlt wird.

19. Verfahren nach Anspruch 18, **dadurch gekennzeichnet, dass** ein dritter Heizschritt zur Glättung erfolgt.

20. Verfahren nach Anspruch 19, **dadurch gekennzeichnet, dass** die Sintertemperatur des ersten Heizschrittes gegenüber der Temperatur des oder der nachfolgenden Glättungsheizschritte grösser ist, wobei die Temperaturdifferenz vorzugsweise nicht grösser als 100°C ist.

21. Verfahren nach einem der Ansprüche 18 bis 20, **dadurch gekennzeichnet, dass** die Membran (2) zwischen zwei Glättungsheizschritten von den Platten abgelöst und in versetzter Position wieder abgelegt werden.

22. Verfahren nach einem der Ansprüche 18 bis 21, umfassend die folgenden Schritte:
- Herstellung einer ersten Al₂O₃ Gehäuseplatte (1) mit einer elektrisch leitenden Oberfläche (7), einer Leitungsöffnung (14) welche die Oberflächen der Platte (1) verbindet und mit zwei elektrischen, vakuumdichten Durchführungen (6), wobei die eine Durchführung (6) mit der leitenden Oberfläche (7) elektrisch verbunden wird;
- Herstellung einer zweiten Al₂O₃ Gehäuseplatte (4) mit einer Leitungsöffnung welche die Oberflächen der Platte (4) verbindet wobei an der Platte (4) ein Anschlusstutzen (5) dichtend und mit der Leitung kommunizierend angebracht wird;
- Beschichtung der einen Membranoberfläche mit einer elektrisch leitenden Schicht (7);
- Montage der Platten (1,4), so dass die Membrane (2) beabstandet zwischen den Platten (1,4) liegt und in deren Randbereich mit den Platten (1,4) umlaufend, vakuumdicht verbunden ist und dass die elektrisch leitenden Schichten (7) der ersten Platte (1) und diejenige der Membrane (2) einander gegenüber liegen und die Messkapazität bilden indem sie einen Referenzvakuumraum (25) begrenzen, wobei die Schicht (7) an der Membran (2) elektrisch leitend mit der anderen Durchführung (6) der ersten Platte (1) verbunden wird und die dem Anschlusstutzen (5) abgewandte Oberfläche (7) der zweiten Platte (4) mit der Membrane (2) einen Messvakuumraum (26) begrenzen;
- Abpumpen des Referenzvakuumraumes (25) durch die Leitung (14) unter Aktivierung eines mit der Leitung (14) in Verbindung stehenden Getters (10) wobei nach Erreichung des Sollvakuums die Leitung (14) mit dem Getter (10) vakuumdicht (8) verschlossen wird.

23. Verfahren nach einem der vorhergehenden Ansprüche 18 bis 22, **dadurch gekennzeichnet, dass** die Mebranform aus dem Al₂O₃ Schlicker gegossen oder gepresst wird, vorzugsweise aus einem auf einer Trägerfolie aufgebrachten bandförmigen Al₂O₃ Grünkörper herausgeschnitten und anschliessend von der Folie abgezogen wird.

24. Verwendung der Messzelle nach einem der vorhergehenden Ansprüche 1 bis 17 für Drücke kleiner 1000 mbar, vorzugsweise kleiner 1 mbar, bei einer Auflösung von besser 1%, vorzugsweise besser 0,3%.

## Claims

1. A capacitive vacuum measuring cell comprising a first housing body (1) of Al₂O₃ with a diaphragm (2) of Al₂O₃ arranged at a spacing therefrom in sealing relationship in the edge region, in such a way that a reference vacuum chamber (25) is formed therebetween, wherein the surfaces of the diaphragm (2) and the housing body (1) which are disposed in opposite relationship at a small spacing are electrically conductively coated (7) and form the measuring capacitor, **characterised in that** a second housing body (4) of Al₂O₃ is provided opposite the diaphragm (2) in sealing relationship in the edge region and forms therewith a measuring vacuum chamber (26) into which open connecting means (5) for connection to the medium to be measured, and that the first housing body (1) and the second housing body (4) with the diaphragm (2) disposed therebetween are sealingly connected symmetrically in the edge region and the surface unevenness of the diaphragm (2) is not more than 30% of the electrode spacing and same is in the range of 2 µm to 50 µm, wherein the diaphragm (2) is of a thickness in the range of 10 µm to 250 µm with a mean grain size of the diaphragm material of ≤ 20 µm and that at least two grains are present in the cross-section of the diaphragm (2) over the thickness, wherein the diameter of the cell is in the range of 5 to 8 mm.

2. A measuring cell according to claim 1 **characterised in that** the electrodes (7) which enclose the reference vacuum chamber (25) and form the measuring capacitor are spaced in the range of 12 µm to 35 µm.

3. A measuring cell according to claim 1 or claim 2 **characterised in that** the connection is in the form of a weld, a diffusion connection or preferably a solder connection, such as in particular with glass solder.

4. A measuring cell according to claims 1 to 3 **characterised in that** the diaphragm (2) is of a thickness in the range of 10 µm to 120 µm.

5. A measuring cell according to claim 4 **characterised in that** the mean grain size of the diaphragm material is ≤ 10 µm, in particular ≤ 5 µm.

6. A measuring cell according to claim 4 or claim 5 **characterised in that** at least five grains are present in the cross-section of the diaphragm (2) over the thickness.

7. A measuring cell according to one of the preceding claims **characterised in that** the surface unevenness of the diaphragm (2) is not more than 15%.

8. A measuring cell according to one of the preceding claims **characterised in that** the surface unevenness of the diaphragm (2) is not more than 10 µm, preferably not more than 5 µm.

9. A measuring cell according to one of the preceding claims **characterised in that** the purity of the Al₂O₃ of the diaphragm (2) is at least 94%, preferably at least 99%.

10. A measuring cell according to one of the preceding claims **characterised in that** the contacts to the electrically conducting layers (7) are sealingly passed out by way of lead-through means (6) on the first housing body (1).

11. A measuring cell according to one of the preceding claims **characterised in that** provided on or in the first housing (1) is a volume (13) with a getter (10), wherein a communication (14) is provided between the volume (13) and the reference vacuum chamber (25) and the volume (13) is sealingly closed by a cover (8).

12. A measuring cell according to claim 11 **characterised in that** the getter is of the "non-evaporating" type.

13. A measuring cell according to claim 11 or claim 12 **characterised in that** the getter (10) is pressed in the volume (13) against the cover (8) by a spring (11).

14. A measuring cell according to claim 13 **characterised in that** a contacting material (12), preferably a solder, is provided between the getter (10) and the cover (8).

15. A measuring cell according to one of the preceding claims **characterised in that** the pressure in the reference vacuum chamber (25) is lower than the lowest pressure to be measured, preferably lower by at least a decade.

16. A measuring cell according to one of the preceding claims **characterised in that** the diameter of the cell is in the range of 5 to 40 mm.

17. A measuring cell according to one of the preceding claims **characterised in that** at least one of the surfaces of the housings (1, 4) has an electrically conducting coating, for forming a screening.

18. A method of manufacturing a measuring cell according to one of claims 1 to 17 with an Al₂O₃ diaphragm, **characterised in that** it includes the following steps:
- diaphragms are formed from an Al₂O₃ slip and the diaphragm thickness is established in such a way that it comprises at least two grains over the thickness,
- thereupon a first heating step is effected for sintering of the diaphragm in a furnace with subsequent cooling,
- then in a second heating step the diaphragm is heated once again and smoothed by a procedure whereby during the smoothing heating step the diaphragm (2) is smoothed between flat plates by being compressed, such as in particular by virtue of a weight loading, and thereafter cooled.

19. A method according to claim 18 **characterised in that** a third heating step is effected for smoothing.

20. A method according to claim 19 **characterised in that** the sintering temperature of the first heating step is higher than the temperature of the subsequent smoothing heating step or steps, the temperature difference preferably being no greater than 100°C.

21. A method according to one of claims 18 to 20 **characterised in that** the diaphragm (2) is stripped from the plates between two smoothing heating steps and deposited again in a displaced position.

22. A method according to one of claims 18 to 21 including the following steps:
- producing a first Al₂O₃ housing plate (1) with an electrically conducting surface (7), a line opening (14) which connects the surfaces of the plate (1) and with two electrical, vacuum-tight lead-through means (6), wherein the one lead-through means (6) is electrically connected to the conducting surface (7),
- producing a second Al₂O₃ housing plate (4) with a line opening which connects the surfaces of the plate (4), wherein a connecting member (5) is mounted to the plate (4) in sealing relationship and communicating with the line,
- coating the one surface of the diaphragm with an electrically conducting layer (7),
- assembly of the plates (1, 4) so that the diaphragm (2) is disposed at a spacing between the plates (1, 4) and in the edge region thereof is vacuum-tightly connected peripherally to the plates (1, 4) and that the electrically conducting layers (7) of the first plate (1) and those of the diaphragm (2) are in mutually opposite relationship and form the measuring capacitor insofar as they delimit a reference vacuum chamber (25), wherein the layer (7) on the diaphragm (2) is electrically conductingly connected to the other lead-through means (6) of the first plate (1) and the surface (7) of the second plate (4), which faces away from the connecting member (5), with the diaphragm (2), delimit a measuring vacuum chamber (26), and
- pumping out the reference vacuum chamber (25) through the line (14) with activation of a getter (10) communicating with the line (14), wherein after the target vacuum is reached the line (14) is vacuum-tightly (8) closed with the getter (10).

23. A method according to one of preceding claims 18 to 22 **characterised in that** the diaphragm is cast or pressed from the Al₂O₃ slip, preferably cut out of an Al₂O₃ main body in band form applied to a carrier foil, and is then pulled off the foil.

24. Use of the measuring cell according to one of preceding claims 1 to 17 for pressures of less than 1000 mbars, preferably less than 1 mbar, with a resolution of better than 1%, preferably better than 0.3%.

## Revendications

1. Cellule de mesure sous vide à capacité qui inclut un premier corps (1) de boîtier en Al₂O₃ et une membrane (2) en Al₂O₃ espacée de celui-ci et agencée de façon étanche dans la zone de bord d'une manière telle qu'un espace de vide de référence (25) est formé entre eux, et où les surfaces de la membrane (2) et du corps (1) de boîtier qui se font face à faible distance portent un revêtement électriquement conducteur (7) et forment la capacité de mesure, **caractérisée en ce que** un deuxième corps (4) de boîtier en Al₂O₃ est prévu de façon étanche dans la zone de bord face à la membrane (2) et forme avec celle-ci un espace de vide de mesure (26) dans lequel débouchent des moyens de raccordement (5) pour connexion avec le fluide à mesurer et **en ce que** le premier corps (1) de boîtier et le deuxième corps (4) de boîtier sont connectés de façon étanche et symétrique dans la zone de bord à la membrane (2) située entre eux et les inégalités superficielles de la membrane (2) ne dépassent pas 30% de la distance entre électrodes qui est incluse dans une plage de 2 µm à 50 µm, l'épaisseur de la membrane (2) étant dans une plage de 10 µm à 250 µm pour une granulométrie moyenne de la matière de membrane ≤ 20 µm, et **en ce qu'**au moins deux grains sont présents en moyenne sur l'épaisseur en coupe transversale de la membrane (2), le diamètre de la cellule étant dans une plage de 5 à 80 mm.

2. Cellule de mesure selon la revendication 1, **caractérisée en ce que** la distance entre les électrodes (7) qui entourent l'espace de vide de référence (25) et forment la capacité de mesure est dans une plage de 12 µm à 35 µm.

3. Cellule de mesure selon la revendication 1 ou 2, **caractérisée en ce que** la connexion est réalisée sous forme de soudure, de connexion par diffusion ou, de préférence, de brasure, en particulier de brasure de verre.

4. Cellule de mesure selon l'une quelconque des revendications 1 à 3, **caractérisée en ce que** l'épaisseur de la membrane 2 est dans une plage de 10 µm à 120 µm.

5. Cellule de mesure selon la revendication 4, **caractérisée en ce que** la granulométrie moyenne de la matière de membrane est = 10 µm, en particulier = 5 µm.

6. Cellule de mesure selon la revendication 4 ou 5, **caractérisée en ce qu'**au moins cinq grains sont présents sur l'épaisseur en coupe transversale de la membrane (2).

7. Cellule de mesure selon l'une quelconque des revendications précédentes, **caractérisée en ce que** les inégalités superficielles de la membrane (2) ne dépassent pas 15%.

8. Cellule de mesure selon l'une quelconque des revendications précédentes, **caractérisée en ce que** les inégalités superficielles de la membrane (2) ne dépassent pas 10 µm, de préférence 5 µm.

9. Cellule de mesure selon l'une quelconque des revendications précédentes, **caractérisée en ce que** la pureté de l'Al₂O₃ de la membrane (2) est au moins de 94%, de préférence d'au moins 99%.

10. Cellule de mesure selon l'une quelconque des revendications précédentes, **caractérisée en ce que** les contacts aux couches électriquement conductrices (7) sont réalisées de façon étanche par des traversées (6) dans le premier corps (1) de boîtier.

11. Cellule de mesure selon l'une quelconque des revendications précédentes, **caractérisée en ce qu'**un volume (13) qui inclut un dégazeur (10) ou getter selon le terme anglo-saxon fréquemment employé est agencé sur ou dans le premier boîtier (1), d'une façon telle qu'une connexion (14) est prévue entre le volume (13) et l'espace de vide de référence (25), et le volume (13) est fermé de façon étanche par le couvercle (8).

12. Cellule de mesure selon la revendication 11, **caractérisée en ce que** le dégazeur est du type "non évaporant".

13. Cellule de mesure selon la revendication 11 ou 12, **caractérisée en ce que** le dégazeur (10) est appuyé dans le volume (13) contre le couvercle (8) au moyen d'un ressort (11).

14. Cellule de mesure selon la revendication 13, **caractérisée en ce qu'**une matière (12) d'attache, de préférence une brasure, est prévue entre le dégazeur (10) et le couvercle (8).

15. Cellule de mesure selon l'une quelconque des revendications précédentes, **caractérisée en ce que** la pression dans l'espace de vide de référence (25) est plus basse, d'au moins une puissance de dix, que la plus basse des pressions à mesurer, de préférence.

16. Cellule de mesure selon l'une quelconque des revendications précédentes, **caractérisée en ce que** le diamètre de la cellule est dans une plage de 5 à 40 mm.

17. Cellule de mesure selon l'une quelconque des revendications précédentes, **caractérisée en ce qu'**au moins l'une des surfaces des boîtiers (1, 4) comporte un revêtement électriquement conducteur pour former un blindage.

18. Procédé de fabrication d'une cellule de mesure selon l'une quelconque des revendications 1 à 17, à membrane en Al₂O₃, **caractérisée en ce qu'**il comprend les étapes consistant à :
- former des membranes à partir dune barbotine d'Al₂O₃ et déterminer épaisseur de la membrane d'une manière telle qu'elle comporte au moins deux grains sur son épaisseur ;
- puis fritter dans un four la membrane dans une première étape à chaud, puis la refroidir ;
- chauffer ensuite de nouveau la membrane et la lisser dans une deuxième étape à chaud, la membrane (2) étant lissée pendant l'étape de chauffage de lissage par compression entre des plaques planes, en particulier par application d'une charge pondérale, et étant ensuite refroidie.

19. Procédé selon la revendication 18, **caractérisé en ce qu'**une troisième étape à chaud est effectuée pour le lissage.

20. Procédé selon la revendication 19, **caractérisé en ce que** la température de frittage de la première étape à chaud est supérieure à la température de l'étape ou des étapes suivantes à chaud de lissage, la différence de température ne dépassant pas, de préférence, 100°C.

21. Procédé selon l'une quelconque des revendications 18 à 20, **caractérisé en ce que** la membrane (2) est détachée des plaques entre deux étapes de lissage à chaud, et est redéposée en position contraire.

22. Procédé selon l'une quelconque des revendications 18 à 21, comprenant les étapes consistant à :
- fabriquer une première plaque (1) de boîtier en Al₂O₃ qui comporte une surface électriquement conductrice (7), une ouverture de conduction (14) qui connecte les surfaces de la plaque (1), ainsi que deux traversées électriques étanches au vide (6), l'une des traversées (6) étant connectée électriquement à la surface conductrice (7) ;
- fabriquer une deuxième plaque (4) de boîtier en Al₂O₃ qui comporte une ouverture de conduction qui connecte les surfaces de la plaque (4), un piquage de raccord (5) étant monté de façon étanche sur la plaque (4) et en communication avec la ligne conductrice ;
- revêtir d'une couche électriquement conductrice (7) l'une des surfaces de membrane ;
- monter les plaques (1, 4) d'une manière telle que la membrane (2) est espacée entre les plaques (1, 4) et est connectée en périphérie de façon étanche au vide dans sa zone de bord aux plaques (1, 4), et que les couches électriquement conductrices (7) de la première plaque (1) et celle de la membrane (2) se font face et constituent la capacité de mesure en limitant un espace vide de référence (25), la couche (7) de la membrane (2) étant connectée de façon électriquement conductrice à l'autre traversée (6) de la première plaque (1) et la surface (7) de la deuxième plaque (4) opposée au piquage de raccord (5) limitant avec la membrane (2) un espace de vide de mesure (26) ;
- mettre en dépression par pompage l'espace de vide de référence (25) par la conduite (14) en activant à un dégazeur (10) qui est en connexion avec la ligne (14), la conduite (14) étant obturée de façon étanche au vide (8) avec le dégazeur (10) lorsque la valeur de consigne de vide a été atteinte.

23. Procédé selon l'une quelconque des revendications 18 à 22, **caractérisé en ce que** la forme de membrane est coulée ou comprimée à partir de la barbotine d'Al₂O₃, de préférence découpée à partir d'un corps de base d'Al₂O₃ en forme de bande appliqué sur une feuille de support, puis détachée de la feuille.

24. Utilisation de la cellule de mesure selon l'une quelconque des revendications 1 à 17 pour des pressions inférieures à 1000 mbar, de préférence inférieures à 1 mbar, pour une résolution supérieure à 1%, de préférence supérieure à 0,3%.
